# EUROPÄISCHE PATENTSCHRIFT

(11) **EP 3 427 691 B1**
(45) Veröffentlichungstag und Bekanntmachung des Hinweises auf die Patenterteilung: **04.12.2019**
(21) Anmeldenummer: 17181328.0
(22) Anmeldetag: 14.07.2017
(51) Int. Cl.: A61C 17/00

(54) **DENTALE PROPHYLAXE-BEHANDLUNGSEINHEIT**
DENTAL PROPHYLAXIS-TREATMENT UNIT
UNITÉ DE TRAITEMENT DE PROPHYLAXIE DENTAIRE

(43) Veröffentlichungstag der Anmeldung: 16.01.2019
(73) Patentinhaber: W & H Dentalwerk Bürmoos GmbH, 5111 Bürmoos (AT)
(72) Erfinder: HOCHRADL, Gerhard, 5121 Ostermiething (AT); PLOY, Gernot, 5111 Bürmoos (AT); EIBL, Johann, 5230 Mattighofen (AT)
(74) Vertreter: Benda, Ralf

(56) Entgegenhaltungen:
- DE-B3-102004 002 868
- US-A- 2 451 918
- US-A- 3 106 732
- US-A- 5 160 263

## Beschreibung

Die vorliegende Erfindung betrifft eine dentale Prophylaxe-Behandlungseinheit, die ein Prophylaxe-Winkelstück mit einem Griffteil, einem Kopfteil und einer in dem Kopfteil drehbar angeordneten Werkzeughalterung sowie ein dentales Werkzeug mit einem Werkzeugschaft und mit einem mit dem Werkzeugschaft verbundenen Prophylaxe-Behandlungsabschnitt aufweist.

Eine derartige Prophylaxe-Behandlungseinheit ist zum Beispiel aus der Patentanmeldung US 2004/063065 A1 oder der Patentschrift US 5,160,263 bekannt. Letztere offenbart eine Prophylaxe-Behandlungseinheit mit einer formschlüssigen Schraubverbindung zwischen der Werkzeughalterung und dem dentalen Werkzeug.

US 3,106,732 offenbart eine dentale Reinigungseinheit, bei der der Schaft des Reinigungswerkzeugs mit einer elastischen Spange gehalten wird.

DE 10 2004 002 868 B3 offenbart in Absatz 30 ein Einsatzteil für ein zahnärztliches Handinstrument mit einem Spannsystem.

Der vorliegenden Erfindung liegt die Aufgabe zugrunde eine Prophylaxe-Behandlungseinheit zu schaffen, die an ihrem vorderen, dem Behandlungsort zugewandten Ende, insbesondere im Bereich des Kopfteils des Prophylaxe-Winkelstück, möglichst geringe Außenabmessungen aufweist, so dass der Anwender einen möglichst freien und ungestörten Blick auf den Behandlungsort hat.

Diese Aufgabe wird gemäß der vorliegenden Erfindung durch eine Prophylaxe-Behandlungseinheit mit den Merkmalen des Anspruchs 1 gelöst. Besonders vorteilhafte Ausführungsformen sind in den Unteransprüchen angeführt.

Die dentale Prophylaxe-Behandlungseinheit umfasst: ein Prophylaxe-Winkelstück mit einem Griffteil, der sich entlang einer Längsachse erstreckt, einem an den Griffteil anschließenden Kopfteil, eine in dem Kopfteil drehbar angeordnete Werkzeughalterung, die sich entlang einer Drehachse erstreckt und insbesondere um diese Drehachse rotiert, wobei die Längsachse des Griffteils und die Drehachse des Kopfteils gewinkelt zueinander angeordnet sind, und ein dentales Werkzeug mit einem Werkzeugschaft und mit einem mit dem Werkzeugschaft verbundenen Prophylaxe-Behandlungsabschnitt, wobei der Werkzeugschaft sich von einem winkelstückseitigen Ende des dentalen Werkzeugs über eine Länge L bis zu dem Prophylaxe-Behandlungsabschnitt erstreckt. Zumindest ein Abschnitt des Werkzeugschafts ist lösbar in der Werkzeughalterung aufnehmbar, so dass das dentale Werkzeug gemeinsam mit der Werkzeughalterung um die Drehachse drehbar ist. Der Werkzeugschaft ist aus Kunststoff hergestellt und die Länge des Werkzeugschafts beträgt maximal 10,0 mm.

Vorzugsweise ist die Werkzeughalterung durch zumindest ein Gleitlager drehbar in dem Kopfteil des Prophylaxe-Winkelstücks gelagert. Alternativ ist die Werkzeughalterung durch zumindest ein Wälzlager oder Kugellager drehbar in dem Kopfteil des Prophylaxe-Winkelstücks gelagert.

Die Werkzeughalterung weist eine Spannvorrichtung auf, die ausgebildet ist, den Werkzeugschaft des dentalen Werkzeugs kraftschlüssig oder reibschlüssig zu fixieren, um den Werkzeugschaft in Bezug auf die Drehachse der Werkzeughalterung axial zu halten und eine Drehmitnahme des Werkzeugschafts und eine Drehmomentübertragung auf den Werkzeugschaft zu bewirken, so dass das dentale Werkzeug gemeinsam mit der Werkzeughalterung um die Drehachse drehbar ist. Es wurde überraschender Weise festgestellt, dass eine derartige kraftschlüssige oder reibschlüssige Spannvorrichtung für eine Prophylaxe-Behandlungseinheit oder für Prophylaxe-Anwendungen ausreicht, um eine zuverlässige Fixierung des Werkzeugschafts in der Spannvorrichtung zu bewirken, d.h., dass insbesondere während des Betriebs der Prophylaxe-Behandlungseinheit keine (wesentliche) Relativbewegung oder Drehung zwischen dem Werkzeugschaft und der Spannvorrichtung auftritt.

Die Spannvorrichtung, die ausgebildet ist, den Werkzeugschaft des dentalen Werkzeugs kraftschlüssig oder reibschlüssig zu fixieren, weist eine Hohlwelle mit einer sich entlang der Drehachse der Werkzeughalterung erstreckenden Bohrung, in welcher zumindest ein Abschnitt des Werkzeugschafts lösbar aufnehmbar ist, auf. Vorzugsweise ist zumindest ein Abschnitt der Hohlwelle ausgebildet, einen Abschnitt des Werkzeugschafts zu kontaktieren, um eine kraftschlüssige oder reibschlüssige Fixierung des Werkzeugschafts in der Hohlwelle zu bewirken. Insbesondere weist dieser kontaktierende Abschnitt der Hohlwelle oder der Bohrung einen Innendurchmesser auf, der maximal gleich groß ist wie der Außendurchmesser des Werkzeugschafts. Vorzugsweise weist zumindest ein Abschnitt der Innenseite der Hohlwelle oder der Bohrung, insbesondere der kontaktierende Abschnitt, eine mechanisch aufgeraute Oberfläche auf.

Des Weiteren umfasst die kraftschlüssige oder reibschlüssige Spannvorrichtung, insbesondere der kontaktierende Abschnitt der Hohlwelle oder der Bohrung, zumindest eine Spannlasche, die in die Bohrung ragt, um den Werkzeugschaft in der Hohlwelle kraftschlüssig oder reibschlüssig zu klemmen. Die zumindest eine Spannlasche ist insbesondere gebogen geformt, zum Beispiel durch eine mechanische Formung. Die zumindest eine Spannlasche ist insbesondere ausgebildet, das dentale Werkzeug ausschließlich durch die von ihr erzeugte und ausgeübte Federwirkung und Haltekraft zu fixieren. Vorzugsweise ist die zumindest eine Spannlasche an zumindest zwei Kontaktstellen nicht lösbar mit der Hohlwelle oder deren Mantel verbunden.

Vorzugsweise ist die Wandstärke der zumindest einen Spannlasche geringer als die Wandstärke eines Bereichs der Hohlwelle ohne Spannlasche, so dass bei der Herstellung der zumindest einen Spannlasche das nach innen Biegen der Spannlasche erleichtert und die Federwirkung der Spannlasche erhöht wird.

Beim Einsetzen des dentalen Werkzeugs in die Spannvorrichtung wird die zumindest eine Spannlasche durch den Schaft radial nach außen (von der Drehachse weg) verdrängt. Die zum Festklemmen des Werkzeugs benötigte Haltekraft resultiert aus der Rückstellkraft der verdrängten Spannlasche. Wird das dentale Werkzeug aus der Spannvorrichtung entnommen, so ist die Federwirkung der zumindest einen Spannlasche ausreichend, um selbständig in ihre Ausgangsstellung zurückzukehren.

Vorzugsweise weist die zumindest eine Spannlasche eine asymmetrische Form auf, insbesondere mit einem der Drehachse zugewandten Scheitelpunkt. Besonders bevorzugt befindet sich der Scheitelpunkt der zumindest einen Spannlasche in der oberen Hälfte, insbesondere bei etwa 2/3 der Gesamtlänge der Spannlasche, bezogen auf die Öffnung der Spannvorrichtung durch die das Werkzeug in die Spannvorrichtung einschiebbar ist.

Vorzugsweise umfasst das Prophylaxe-Winkelstück oder die Werkzeughalterung keine Betätigungsvorrichtung zum Lösen und / oder Aufnehmen des dentalen Werkzeugs oder des Werkzeugschafts in der Werkzeughalterung. Das Fehlen einer derartigen Betätigungsvorrichtung ist insbesondere bei Vorhandensein einer im Vorstehenden beschriebenen kraftschlüssigen oder reibschlüssigen Schiebe-Spannvorrichtung realisierbar. Dies bedeutet insbesondere, dass die Werkzeughalterung derart ausgebildet ist, dass die von der Werkzeughalterung erzeugte und/ oder ausgeübte Haltekraft zum, insbesondere axialen, Halten des dentalen Werkzeugs ein zuverlässiges Befestigen des dentalen Werkzeugs in der Werkzeughalterung sicherstellt, jedoch auch ein einfaches Lösen des dentalen Werkzeugs ohne Betätigungsvorrichtung und ohne zu großen Kraftaufwand für den Anwender zulässt.

Demgemäß beträgt die von der Werkzeughalterung erzeugte und/ oder ausgeübte Haltekraft, insbesondere bei Prophylaxe-Winkelstück ohne Betätigungsvorrichtung zum Lösen und / oder Aufnehmen des dentalen Werkzeugs, bevorzugt maximal 20 N, vorzugsweise liegt sie im Bereich von 13 N bis 17 N. Es wurde festgestellt, dass die genannten Werte der Haltekraft ausreichend sind, da bei der Anwendung der dentalen Prophylaxe-Behandlungseinheit keine ziehende Belastung, sondern insbesondere nur drückende Belastungen auf die Behandlungsstelle ausgeübt werden. Diese im Vergleich zu herkömmlichen dentalen Handstücken geringere Haltekraft wird zum Beispiel durch das Vorsehen einer geringeren Anzahl von Halteelementen der Spannvorrichtung erreicht, zum Beispiel indem nur ein oder zwei kugelförmige Halteelemente oder nur ein, zwei oder drei Spannlaschen vorgesehen sind. Besonders bevorzugt entspricht die Auszugskraft zum Lösen des dentalen Werkzeugs aus der Werkzeughalterung der Haltekraft und/ oder weist im Wesentlichen dieselben Werte auf, i.e. maximal 20 N, vorzugsweise 13 N bis 17 N.

Vorzugsweise ist die kraftschlüssige oder reibschlüssige, insbesondere klemmende, Spannvorrichtung als Schiebe-Spannvorrichtung ausgebildet, in welche zumindest ein Abschnitt des Werkzeugschafts einschiebbar ist. Insbesondere ist zumindest ein Abschnitt des Werkzeugschafts durch eine schiebende und / oder geradlinige Bewegung entlang der Drehachse der Werkzeughalterung in die Bohrung der Hohlwelle einbringbar oder daraus entfernbar.

Vorzugsweise ist die Hohlwelle der Schiebe-Spannvorrichtung derart ausgebildet, dass während des Einschiebens oder des Entnehmens des Werkzeugs die Innenwand der Hohlwelle zumindest einen Abschnitt des Werkzeugschafts kontaktierend führt und / oder zumindest ein Abschnitt des Werkzeugschafts an der Innenwand der Hohlwelle gleitet.

Vorzugsweise ist an dem dentalen Werkzeug, insbesondere an dem Werkzeugschaft, ein Begrenzungselement vorgesehen, zum Beispiel eine Schulter oder ein Vorsprung, das die Einschubtiefe des Werkzeugschafts in die Spannvorrichtung oder Hohlwelle begrenzt. Alternativ oder zusätzlich ist an der Spannvorrichtung oder Hohlwelle zumindest ein Anschlagelement vorgesehen, zum Beispiel eine Schulter oder eine Stufe, das insbesondere durch eine Veränderung des Innendurchmessers der Bohrung der Hohlwelle gebildet ist und das die Einschubtiefe des Werkzeugschafts in die Spannvorrichtung oder Hohlwelle begrenzt.

Vorzugsweise umfasst die Prophylaxe-Behandlungseinheit ein Dichtsystem zum Abdichten des Kopfteils des Prophylaxe-Winkelstücks, das ein Eindringen von Verunreinigungen und / oder eines Behandlungsmittels in den Kopfteil verhindert.

Vorzugsweise ist das Dichtsystem an dem dentalen Werkzeug vorgesehen, wobei es insbesondere derart an dem dentalen Werkzeug angeordnet ist, dass es mit dem Kopfteil des Prophylaxe-Winkelstücks zusammenwirkt, um ein Eindringen von Verunreinigungen und / oder eines Behandlungsmittels in den Kopfteil zu verhindern. Insbesondere umgreift, kontaktiert und/ oder bedeckt das Dichtsystem die dem dentalen Werkzeug zugewandte Unterseite des Kopfteils oder eine Werkzeugaufnahmeöffnung des Kopfteils, durch die das dentale Werkzeug in den Kopfteil einführbar und entnehmbar ist. Vorzugsweise umfasst das Dichtsystem eine Schürze, die insbesondere an einem Ende des Behandlungsabschnitts des dentalen Werkzeugs vorgesehen ist.

Alternativ ist das Dichtsystem an dem Prophylaxe-Winkelstück vorgesehen, insbesondere an der dem dentalen Werkzeug zugewandten Unterseite des Kopfteils oder an der Werkzeugaufnahmeöffnung.

Alternativ ist das Dichtsystem mehrteilig aufgebaut, wobei zumindest ein erster Teil des Dichtsystems an dem dentalen Werkzeug und zumindest ein zweiter Teil des Dichtsystems an dem Prophylaxe-Winkelstück vorgesehen ist, wobei der erste Teil und der zweite Teil des Dichtsystems zusammenwirken, um ein Eindringen von Verunreinigungen und / oder eines Behandlungsmittels in den Kopfteil zu verhindern. Zum Beispiel greifen die beiden Teile des Dichtsystems ineinander oder sie kontaktieren einander. Zum Beispiel ist der erster Teil des Dichtsystems an dem dentalen Werkzeug so oder ähnlich aufgebaut, wie dies im Vorstehenden für ein an dem dentalen Werkzeug vorgesehenes Dichtsystem beschrieben ist.

Vorzugsweise ist das Dichtsystem, insbesondere das mehrteilig aufgebaute Dichtsystem, derart ausgebildet, dass das Einschieben des dentalen Werkzeugs in die Schiebe-Spannvorrichtung eine Dichtwirkung des Dichtsystems bewirkt oder erhöht, zum Beispiel durch das Ineinandergreifen des ersten und zweiten Teils des Dichtsystems und / oder durch ein Verbinden oder Kontaktieren des Dichtsystems mit einem Element des Prophylaxe-Winkelstücks oder des dentalen Werkzeugs.

Vorzugsweise ist der Werkzeugschaft des dentalen Werkzeugs über die gesamte Länge als zylindrischer Stift ohne Ausnehmung zum Eingriff der Werkzeughalterung ausgebildet. Bevorzugt weist der Werkzeugschaft über die gesamte Länge eine glatte Oberfläche und / oder eine nicht profilierte Oberfläche auf, insbesondere eine Oberfläche ohne Ausnehmung zum Eingriff eines Elements der Werkzeughalterung, weder für axiale Sicherung noch für Drehmomentübertragung oder Drehmitnahme. Ein derartiges dentales Werkzeug ist insbesondere mit einer Spannvorrichtung verwendbar oder in diese einführbar, die ausgebildet ist, den Werkzeugschaft des dentalen Werkzeugs kraftschlüssig oder reibschlüssig zu fixieren.

Alternativ ist an dem Werkzeugschaft des dentalen Werkzeugs zumindest eine Ausnehmung zum Eingriff der Werkzeughalterung, insbesondere der zumindest einen formschlüssigen Verbindungseinheit, und / oder zumindest ein Mitnehmerelement, im Vorstehenden auch als zweites Mitnehmerelement bezeichnet, vorgesehen. Die Ausnehmung ist zum Beispiel als Ringnut und / oder Rücksprung und / oder Vertiefung ausgebildet. Das (zweite) Mitnehmerelement ist zum Beispiel als Ringnut und / oder Rücksprung und / oder Vertiefung oder Abflachung, insbesondere an dem winkelstückseitigen Ende des dentalen Werkzeugs, ausgebildet. Ein derartiges dentales Werkzeug ist insbesondere mit einer Spannvorrichtung verwendbar oder in diese einführbar, die ausgebildet ist, den Werkzeugschaft des dentalen Werkzeugs formschlüssig zu fixieren.

Durch die im Vorstehenden beschriebenen einzelnen Merkmale und vorzugsweise durch die Kombination mehrerer oder aller dieser Merkmale ist eine Prophylaxe-Behandlungseinheit geschaffen, die an ihrem vorderen, dem Behandlungsort zugewandten Ende, insbesondere im Bereich des Kopfteils des Prophylaxe-Winkelstück, geringe Außenabmessungen aufweist. Insbesondere die Verwendung einer Schiebe-Spannvorrichtung, die Verwendung von Gleitlagern und / oder das Fehlen einer Betätigungsvorrichtung zum Lösen und / oder Aufnehmen des dentalen Werkzeugs in der Werkzeughalterung bewirken eine erhebliche Verkleinerung des Kopfteils. Vorzugsweise beträgt die Höhe des Kopfteils von der Werkzeugaufnahmeöffnung bis zur der der Werkzeugaufnahmeöffnung gegenüberliegenden Seite des Kopfteils maximal 11,5 mm, vorzugsweise maximal 10,0 mm, besonders bevorzugt maximal 9,5 mm. Vorzugsweise beträgt der Durchmesser des Kopfteils maximal 8,5 mm, vorzugsweise maximal 7,8 mm. Vorzugsweise beträgt die Länge der Hohlwelle der Werkzeughalterung maximal 7,8 mm vorzugsweise maximal 7,5 mm, der Außendurchmesser der Hohlwelle maximal 6,0 mm, vorzugsweise maximal 5,5 mm, und der Innendurchmesser der Hohlwelle maximal 2,36 mm, vorzugsweise 2,35 mm.

Aufgrund der im Vorstehenden genannten Merkmale und der Verkleinerung des Kopfteils ist es möglich, die Länge L des Werkzeugschafts auf maximal 10,0 mm, vorzugsweise auf maximal 8,0 mm, zu begrenzen. Die Herstellung des Werkzeugschafts aus Kunststoff verbessert insbesondere die Gleitfähigkeit des Werkzeugschafts beim Einschieben oder Entnehmen in die Schiebe-Spannvorrichtung.

Die Erfindung wird nachfolgend anhand bevorzugter Ausführungsbeispiele und Bezug nehmend auf die beigefügten Zeichnungen erläutert. Es zeigt die
Figur 1 ein erstes , nicht beanspruchtes Ausführungsbeispiel einer Prophylaxe-Behandlungseinheit mit einer Spannvorrichtung, die den Werkzeugschaft des dentalen Werkzeugs formschlüssig fixiert und die nicht Teil der Erfindung ist;
Figur 2 einen Kopfteil eines erfindungsgemäßen Prophylaxe-Winkelstücks mit einer Spannvorrichtung, die den Werkzeugschaft des dentalen Werkzeugs kraft- oder reibungsschlüssig fixiert;
Figur 2A eine Prophylaxe-Behandlungseinheit mit dem Prophylaxe-Winkelstück der Figur 2;
Figur 3 einen Kopfteil eines nicht beanspruchten Prophylaxe-Winkelstücks mit einer Spannvorrichtung, die den Werkzeugschaft des dentalen Werkzeugs formschlüssig fixiert und die nicht Teil der Erfindung ist;
Figur 3A eine Prophylaxe-Behandlungseinheit mit dem Prophylaxe-Winkelstück der Figur 3.

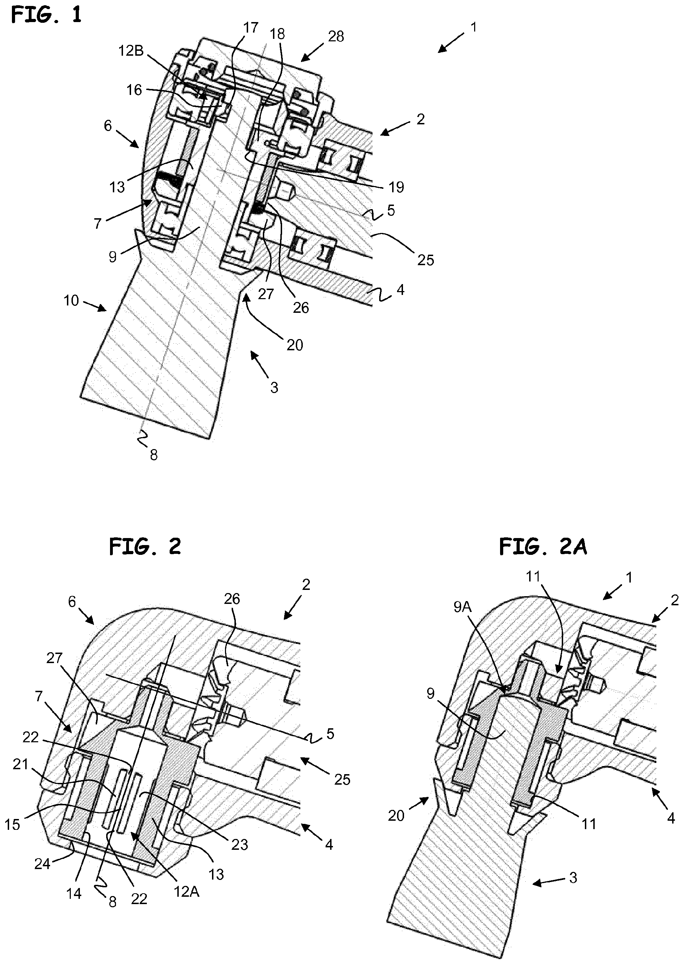

Die in den Figuren 1, 2A, 3A dargestellte Prophylaxe-Behandlungseinheit 1 umfasst jeweils ein Prophylaxe-Winkelstück 2 und ein lösbar mit dem Prophylaxe-Winkelstück 2 verbindbares dentales Werkzeug 3.

Das in den Figuren 1 - 3A dargestellt Prophylaxe-Winkelstück 2 hat einen Griffteil 4 zum Halten des Prophylaxe-Winkelstücks 2 mit einer Hand, der sich entlang einer Längsachse 5 erstreckt. An den Griffteil 4 schließt ein Kopfteil 6 an, in dem drehbar eine Werkzeughalterung 7 angeordnet ist. Die Werkzeughalterung 7 erstreckt sich entlang einer Drehachse 8. Die Längsachse 5 des Griffteils 4 und die Drehachse 8 des Kopfteils 6 sind gewinkelt zueinander angeordnet, so dass insbesondere eine Werkzeugaufnahmeöffnung 24 seitlich an dem Kopfteil 6 oder seitlich versetzt zum Griffteil 4 angeordnet ist. Entsprechend erstrecken sich das dentale Werkzeug 3, insbesondere dessen Werkzeugschaft 9, und / oder die Werkzeughalterung 7 entlang der Drehachse 8 und / oder gewinkelt zur Längsachse 5 des Griffteils 4.

Der Griffteil 4 und der Kopfteil 6 sind vorzugsweise aus Metall gefertigt. Der Griffteil 4 und der Kopfteil 6 sind entweder einteilig und damit voneinander unlösbar ausgebildet (siehe Figuren 2, 2A) oder der Griffteil 4 und der Kopfteil 6 sind als separate, miteinander verbindbare Elemente geformt.

Im Griffteil 4 ist eine Antriebswelle 25 drehbar gelagert. An dem Ende der Antriebswelle 25, das dem Kopfteil 6 zugewandt ist, ist ein erstes Zahnrad 26 vorgesehen, das mit einem zweiten, mit der Werkzeughalterung 7 verbundenen Zahnrad 27 in Eingriff steht. Über das durch die beiden Zahnräder 26, 27 gebildete Getriebe ist eine rotierende Antriebsbewegung von der Antriebswelle 25 auf die Werkzeughalterung 7 und ein damit verbundenes dentales Werkzeug 3 übertragbar. Die beiden Zahnräder 26, 27 sind vorzugsweise aus Metall hergestellt.

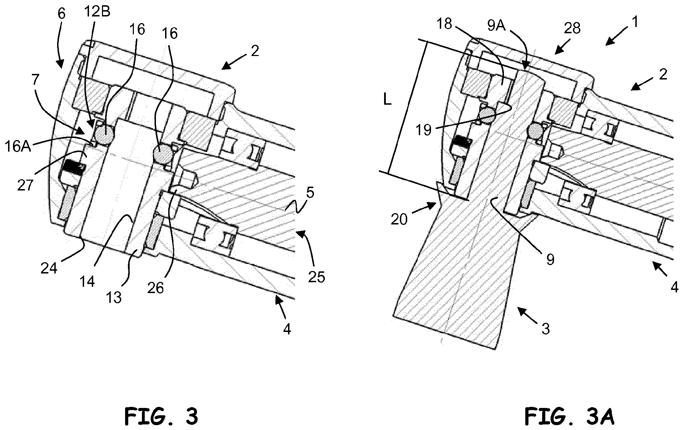

Das dentale Werkzeug 3 umfasst einen Werkzeugschaft 9 und einen mit dem Werkzeugschaft 9 verbundenen Prophylaxe-Behandlungsabschnitt 10. Der Werkzeugschaft 9 erstreckt sich von einem winkelstückseitigen Ende 9A des dentalen Werkzeugs 3 über eine Länge L (siehe Figur 3A) bis zu dem Prophylaxe-Behandlungsabschnitt 10. Zumindest ein Abschnitt des Werkzeugschafts 9 ist lösbar in der Werkzeughalterung 7 aufnehmbar, so dass das dentale Werkzeug 3 gemeinsam mit der Werkzeughalterung 7 um die Drehachse 8 drehbar ist. Der Werkzeugschaft 9 ist aus Kunststoff hergestellt. Die Länge L des Werkzeugschafts 9 beträgt maximal 10,0 mm.

Das dentale Werkzeug 3 ist als Prophylaxe-Werkzeug ausgebildet und umfasst zum Beispiel als Prophylaxe-Behandlungsabschnitt 10 ein Prophy-Cup zum Behandeln einer dentalen Oberfläche mit einer Paste, siehe die Figuren 1, 2A, 3A. Der Prophylaxe-Behandlungsabschnitt 10 kann jedoch auch anders ausgebildet sein, zum Beispiel als Bürste.

Die Werkzeughalterung 7 umfasst eine Spannvorrichtung 12A oder 12B, die im Folgenden noch im Detail beschrieben sind. Beiden Spannvorrichtungen 12A, 12B ist gemein, dass sie als Schiebe-Spannvorrichtungen ausgebildet sind. Als Schiebe-Spannvorrichtung werden Spannvorrichtung verstanden, in die zumindest ein Abschnitt des Werkzeugschafts 9 durch eine schiebende und / oder geradlinige Bewegung entlang der Drehachse 8 der Werkzeughalterung 7 (und / oder in einem Winkel größer 0° zur Längsachse 5 des Abschnitts des Griffteils 4, der unmittelbar an den Kopfteil 6 anschließt) einführbar oder daraus entfernbar ist. Die Spannvorrichtungen 12A, 12B umfassen insbesondere eine Hohlwelle 13 mit einer Bohrung 14, in die zumindest ein Abschnitt des Werkzeugschafts 9 in entsprechender Weise einschiebbar oder daraus entfernbar ist. An der Hohlwelle 13 ist das Zahnrad 27 befestigt. Die Hohlwelle 13 ist vorzugsweise aus Metall hergestellt.

Die in den Figuren 2, 2A dargestellte Werkzeughalterung 7 weist eine Spannvorrichtung 12A auf, die ausgebildet ist, den Werkzeugschaft 9 des dentalen Werkzeugs 3 kraftschlüssig oder reibschlüssig zu fixieren, um den Werkzeugschaft 9 in Bezug auf die Drehachse 8 der Werkzeughalterung 7 axial zu halten und eine Drehmitnahme des Werkzeugschafts 9 zu bewirken.

Die Werkzeughalterung 7 ist durch zwei Gleitlager 11 drehbar in dem Kopfteil 6 des Prophylaxe-Winkelstücks 2 gelagert.

Die kraftschlüssige oder reibschlüssige Spannvorrichtung 12A weist eine Hohlwelle 13 mit einer sich entlang der Drehachse 8 der Werkzeughalterung 7 erstreckenden Bohrung 14 auf, in welcher, wie im Vorstehenden beschrieben, zumindest ein Abschnitt des Werkzeugschafts 9 lösbar aufnehmbar ist, insbesondere durch eine Schiebebewegung entlang der Drehachse 8. Die kraftschlüssige oder reibschlüssige Spannvorrichtung 12A umfasst des Weiteren zumindest eine Spannlasche 15, die in das Innere der Bohrung 14 ragt, um den Werkzeugschaft 9 in der Hohlwelle 13 zu klemmen.

Die in den Figuren 2, 2A dargestellte kraftschlüssige oder reibschlüssige Spannvorrichtung 12A hat mehrere, insbesondere gleichmäßig, voneinander beabstandete Spannlaschen 15. Alle, zum Beispiel drei, Spannlaschen 15 sind durch Einfügen jeweils zweier Schlitze 21 in einen Mantel der Hohlwelle 13 herausgearbeitet.

Jede Spannlasche 15 ist an jeweils zwei Kontaktstellen 22 mit der Hohlwelle 13, insbesondere deren Mantel, unlösbar verbunden. Die Spannlaschen 15 sind radial nach innen (in die Bohrung 14) gebogen, so dass insbesondere die lichte Weite zwischen einer nach innen gebogenen Spannlasche 15 und der Innenwand der Bohrung 14 geringer ist als der Durchmesser des Werkzeugschafts 9.

Zwischen den Spannlaschen 15 bzw. den jeweiligen Schlitzen 21 befinden sich Stege 23, welche die Spannvorrichtung 12A, insbesondere die Hohlwelle 13, stabilisieren.

Die in den Figuren 1, 3, 3A dargestellte Werkzeughalterung 7 weist eine Spannvorrichtung 12B auf, die ausgebildet ist, den Werkzeugschaft 9 des dentalen Werkzeugs 3 formschlüssig zu fixieren. Die Spannvorrichtung 12B umfasst wiederum eine Hohlwelle 13 mit einer Bohrung 14, in die zumindest ein Abschnitt des Werkzeugschafts 9 einschiebbar oder durch Schieben daraus entfernbar ist.

Die formschlüssige Spannvorrichtung 12B umfasst des Weiteren zumindest ein Halteelement 16, das in Bezug auf die Drehachse 8 der Werkzeughalterung 7 radial beweglich ist und ausgebildet ist, in eine Ausnehmung 17 an dem Werkzeugschaft 9 einzugreifen. Das Halteelement 16 ist insbesondere zur axialen Sicherung des Werkzeugs 3 oder des Werkzeugschafts 9 in der formschlüssigen Spannvorrichtung 12B vorgesehen. Das Prophylaxe-Winkelstück 2 der Figur 1 umfasst ein einziges radial bewegliches Halteelement 16 mit einem Keil oder Fortsatz, der zwischen einer Halteposition, in welcher er der Drehachse 8 radial angenähert ist und in die Ausnehmung 17 eingreift, um das dentale Werkzeug 3 axial in der Werkzeughalterung 7 zu fixieren, und einer Löseposition, in welcher er von der Drehachse 8 radial entfernt ist und nicht in die Ausnehmung 17 eingreift, so dass das dentale Werkzeug 3 aus der Werkzeughalterung 7 lösbar ist, bewegbar ist.

Das Prophylaxe-Winkelstück 2 der Figuren 3, 3A umfasst mehrere, zum Beispiel zwei oder drei, radial bewegliche Halteelemente 16. Die Halteelemente 16 sind als Kugeln geformt. Die mehreren Halteelemente 16 sind wie im vorstehenden Absatz beschrieben ebenfalls zwischen einer Halteposition und einer Löseposition bewegbar. Ein Federelement 16A, zum Beispiel ein Federring mit Durchbrüchen, in denen die Halteelemente 16 aufgenommen sind, oder eine Spiralfeder, drücken die Halteelemente 16 in die Bohrung 14 und/ oder Bewegen die Halteelemente 16 in Richtung der Drehachse 8, wenn diese, zum Beispiel beim Einführen oder Lösen des Werkzeugschaftes 9, von der Drehachse 8 wegbewegt wurden.

Zum Bewegen des zumindest einen Halteelements 16 ist eine Betätigungsvorrichtung 28 vorgesehen, die operativ mit dem zumindest einen Halteelement 16 verbunden ist, um das Halteelement 16 zwischen der Halteposition und der Löseposition zu bewegen. Die Betätigungsvorrichtung 28 ist somit insbesondere auch ausgebildet, das Lösen und / oder Aufnehmen des dentalen Werkzeugs 3 oder des Werkzeugschafts 9 in der Werkzeughalterung 7 zu ermöglichen. Die Betätigungsvorrichtung 28 umfasst insbesondere einen Drucktaster an einem der Werkzeugaufnahmeöffnung 24 entgegengesetzten Ende des Kopfteils 6.

Die formschlüssige Spannvorrichtung 12B umfasst des Weiteren zumindest ein erstes Mitnehmerelement 18, das ausgebildet ist, mit einem zweiten Mitnehmerelement 19 an dem Werkzeugschaft 9 zusammenzuwirken, um eine Drehmitnahme des Werkzeugschafts 9 und eine Drehmomentübertragung auf den Werkzeugschaft zu bewirken. Das erste Mitnehmerelement 18 umfasst einen Fortsatz, der in das zweite Mitnehmerelement 19 in Form einer Abflachung an einem freien Ende des Werkzeugschafts 9 eingreift. Das erste Mitnehmerelement 18 ist (durch die Antriebswelle 25) gemeinsam mit der formschlüssigen Spannvorrichtung 12B oder Hohlwelle 13 in Drehung versetzbar und nimmt aufgrund des Eingriffs in das zweite Mitnehmerelement 19 den Werkzeugschaft 9 mit, so dass das dentale Werkzeug 3 in Drehung versetzbar ist und ein Drehmoment auf das dental Werkzeug 3 übertragbar ist.

Die Figuren 1, 2A, 3A zeigen des Weiteren ein Dichtsystem 20 zum Abdichten des Kopfteils 6 des Prophylaxe-Winkelstücks 2, um das Eindringen von Verunreinigungen und / oder eines Behandlungsmittels in den Kopfteil 6 zu verhindern. Das Dichtsystem 20 ist zumindest teilweise oder vollständig an dem dentalen Werkzeug 3 vorgesehen. Das Dichtsystem 20 ist derart an dem dentalen Werkzeug 3 angeordnet, dass es mit dem Kopfteil 6 des Prophylaxe-Winkelstücks 2 zusammenwirkt, insbesondere die Werkzeugaufnahmeöffnung 24 umgreift und / oder die Unterseite des Kopfteils 6, an dem die Werkzeugaufnahmeöffnung 24 vorgesehen ist, umgreift oder kontaktiert.

Das Dichtsystem 20 ist derart ausgebildet, dass das Einschieben des dentalen Werkzeugs 3 in die Schiebe-Spannvorrichtung 12A, 12B eine Dichtwirkung des Dichtsystems bewirkt oder erhöht, zum Beispiel durch den durch das Einschieben des dentalen Werkzeugs 3 entstehenden Kontakt zwischen dem Dichtsystem 20 und der Unterseite des Kopfteils 6.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Dentale Prophylaxe-Behandlungseinheit (1), umfassend: ein Prophylaxe-Winkelstück (2) mit einem Griffteil (4), der sich entlang einer Längsachse (5) erstreckt, einem an den Griffteil (4) anschließenden Kopfteil (6), eine in dem Kopfteil (6) drehbar angeordnete Werkzeughalterung (7), die sich entlang einer Drehachse (8) erstreckt, wobei die Längsachse (5) des Griffteils (4) und die Drehachse (8) des Kopfteils (6) gewinkelt zueinander angeordnet sind, und ein dentales Werkzeug (3) mit einem Werkzeugschaft (9) und mit einem mit dem Werkzeugschaft (9) verbundenen Prophylaxe-Behandlungsabschnitt (10), wobei der Werkzeugschaft (9) sich von einem winkelstückseitigen Ende (9A) des dentalen Werkzeugs (3) über eine Länge (L) bis zu dem Prophylaxe-Behandlungsabschnitt (10) erstreckt, wobei zumindest ein Abschnitt des Werkzeugschafts (9) lösbar in der Werkzeughalterung (7) aufnehmbar ist, so dass das dentale Werkzeug (3) gemeinsam mit der Werkzeughalterung (7) um die Drehachse (8) drehbar ist, wobei der Werkzeugschaft (9) aus Kunststoff hergestellt ist und wobei die Länge (L) des Werkzeugschafts (9) maximal 10,0 mm beträgt, **dadurch gekennzeichnet, dass**
die Werkzeughalterung (7) eine Spannvorrichtung (12A) aufweist, die ausgebildet ist, den Werkzeugschaft (9) des dentalen Werkzeugs (3) kraftschlüssig oder reibschlüssig zu fixieren, um den Werkzeugschaft (9) in Bezug auf die Drehachse (8) der Werkzeughalterung (7) axial zu halten und eine Drehmitnahme des Werkzeugschafts (9) zu bewirken, so dass das dentale Werkzeug (3) gemeinsam mit der Werkzeughalterung (7) um die Drehachse (8) drehbar ist, wobei die kraftschlüssige oder reibschlüssige Spannvorrichtung (12A) eine Hohlwelle (13) mit einer sich entlang der Drehachse (8) der Werkzeughalterung (7) erstreckenden Bohrung (14), in welcher zumindest ein Abschnitt des Werkzeugschafts (9) lösbar aufnehmbar ist, und zumindest eine Spannlasche (15) aufweist, die in die Bohrung (14) ragt, um den Werkzeugschaft (9) in der Hohlwelle (13) zu klemmen.

2. Dentale Prophylaxe-Behandlungseinheit (1) nach Anspruch 1, **dadurch gekennzeichnet, dass**
die Werkzeughalterung (7) durch zumindest ein Gleitlager (11) drehbar in dem Kopfteil (6) des Prophylaxe-Winkelstücks (2) gelagert ist.

3. Dentale Prophylaxe-Behandlungseinheit (1) nach Anspruch 1, **dadurch gekennzeichnet, dass**
die Werkzeughalterung (7) durch zumindest ein Wälzlager oder Kugellager drehbar in dem Kopfteil (6) des Prophylaxe-Winkelstücks (2) gelagert ist.

4. Dentale Prophylaxe-Behandlungseinheit (1) nach einem der vorstehenden Ansprüche, **dadurch gekennzeichnet dass**
die zumindest eine Spannlasche (15) einen kontaktierenden Abschnitt der Hohlwelle (13) bildet, der einen Abschnitt des Werkzeugschafts (9) kontaktiert, um die kraftschlüssige oder reibschlüssige Fixierung des Werkzeugschafts (9) in der Hohlwelle (13) zu bewirken.

5. Dentale Prophylaxe-Behandlungseinheit (1) nach Anspruch 4, **dadurch gekennzeichnet, dass**
der kontaktierende Abschnitt einen Innendurchmesser aufweist, der maximal gleich groß ist wie der Außendurchmesser des Werkzeugschafts (9).

6. Dentale Prophylaxe-Behandlungseinheit (1) nach Anspruch 4 oder 5, **dadurch gekennzeichnet, dass**
der kontaktierende Abschnitt eine mechanisch aufgeraute Oberfläche aufweist.

7. Dentale Prophylaxe-Behandlungseinheit (1) nach einem der vorstehenden Ansprüche, **dadurch gekennzeichnet, dass**
die zumindest eine Spannlasche (15) ausgebildet ist, das dentale Werkzeug (3) ausschließlich durch die von ihr erzeugte und ausgeübte Federwirkung und Haltekraft zu fixieren.

8. Dentale Prophylaxe-Behandlungseinheit (1) nach einem der vorstehenden Ansprüche, **dadurch gekennzeichnet, dass**
die zumindest eine Spannlasche (15) an zumindest zwei Kontaktstellen (22) nicht lösbar mit der Hohlwelle (13) oder deren Mantel verbunden ist.

9. Dentale Prophylaxe-Behandlungseinheit (1) nach einem der vorstehenden Ansprüche, **gekennzeichnet durch**
ein Dichtsystem (20) zum Abdichten des Kopfteils (6) des Prophylaxe-Winkelstücks (2), das ein Eindringen von Verunreinigungen und / oder eines Behandlungsmittels in den Kopfteil (6) verhindert und das an dem dentalen Werkzeug (3) vorgesehen ist, wobei es insbesondere derart an dem dentalen Werkzeug (3) angeordnet ist, dass es mit dem Kopfteil (6) des Prophylaxe-Winkelstücks (2) zusammenwirkt, um ein Eindringen von Verunreinigungen und / oder eines Behandlungsmittels in den Kopfteil (6) zu verhindern.

10. Dentale Prophylaxe-Behandlungseinheit (1) nach einem der vorstehenden Ansprüche, **gekennzeichnet durch**
ein Dichtsystem (20) zum Abdichten des Kopfteils (6) des Prophylaxe-Winkelstücks (2), das ein Eindringen von Verunreinigungen und / oder eines Behandlungsmittels in den Kopfteil (6) verhindert und das an dem Prophylaxe-Winkelstück (2) vorgesehen ist.

11. Dentale Prophylaxe-Behandlungseinheit (1) nach einem der vorstehenden Ansprüche, **gekennzeichnet durch**
ein Dichtsystem (20) zum Abdichten des Kopfteils (6) des Prophylaxe-Winkelstücks (2), das ein Eindringen von Verunreinigungen und / oder eines Behandlungsmittels in den Kopfteil (6) verhindert und das mehrteilig aufgebaut ist, wobei zumindest ein erster Teil des Dichtsystems (20) an dem dentalen Werkzeug (3) und zumindest ein zweiter Teil des Dichtsystems (20) an dem Prophylaxe-Winkelstück (2) vorgesehen ist, wobei der erste Teil und der zweite Teil des Dichtsystems (20) zusammenwirken, um ein Eindringen von Verunreinigungen und / oder eines Behandlungsmittels in den Kopfteil (6) zu verhindern.

12. Dentale Prophylaxe-Behandlungseinheit (1) nach einem der vorstehenden Ansprüche, **dadurch gekennzeichnet, dass**,
die Spannvorrichtung (12A, 12B) als Schiebe-Spannvorrichtung ausgebildet ist, in welche zumindest ein Abschnitt des Werkzeugschafts (9) durch eine schiebende und / oder geradlinige Bewegung entlang der Drehachse (8) der Werkzeughalterung (7) in die Bohrung (14) der Hohlwelle (13) einschiebbar oder daraus entfernbar ist.

13. Dentale Prophylaxe-Behandlungseinheit (1) nach Anspruch 12 in Kombination mit einem der Ansprüche 9, 10 oder 11, **dadurch gekennzeichnet, dass**
das Dichtsystem (20), insbesondere das mehrteilig aufgebaute Dichtsystem, derart ausgebildet ist, dass das Einschieben des dentalen Werkzeugs (3) in die Schiebe-Spannvorrichtung eine Dichtwirkung des Dichtsystems bewirkt oder erhöht.

14. Dentale Prophylaxe-Behandlungseinheit (1) nach einem der vorstehenden Ansprüche, **dadurch gekennzeichnet, dass**
der Werkzeugschaft (9) über die gesamte Länge (L) als zylindrischer Stift ohne Ausnehmung zum Eingriff der Werkzeughalterung (7) ausgebildet ist.

15. Dentale Prophylaxe-Behandlungseinheit (1) nach einem der vorstehenden Ansprüche, **dadurch gekennzeichnet, dass**
das Prophylaxe-Winkelstück (2) keine Betätigungsvorrichtung zum Lösen und / oder Aufnehmen des dentalen Werkzeugs (3) oder des Werkzeugschafts (9) in der Werkzeughalterung (7) aufweist.

## Claims

1. Dental prophylaxis-treatment unit (1), comprising: a prophylaxis-contra angle handpiece (2) having a handle portion (4) extending along a longitudinal axis (5), a head part (6) adjacent to the handle portion (4), a tool holder (7) rotatably arranged in the head part (6) and extending along a rotational axis (8), wherein the longitudinal axis (5) of the handle portion (4) and the rotational axis (8) of the head part (6) are arranged at an angle to one another, and a dental tool (3) having a tool shank (9) and a prophylaxis-treatment portion (10) connected to the tool shank (9), wherein the tool shank (9) has a length (L) extending from an end (9A) at a contra angle handpiece side of the dental tool (3) to the prophylaxis-treatment portion (10), wherein at least a portion of the tool shank (9) can be received detachably in the tool holder (7), such that the dental tool (3) is rotatable together with the tool holder (7) about the rotational axis (8), wherein the tool shank (9) is made of plastic and wherein the length (L) of the tool shank (9) is a maximum of 10,0 mm, **characterized in that**
the tool holder (7) comprises a chucking device (12A) which is configured to fasten the tool shank (9) of the dental tool (3) in a force-fit manner or frictionally to axially retain the tool shank (9) relative to the rotational axis (8) of the tool holder (7) and to exert a rotatable entrainment of the tool shank (9) so that the dental tool (3) is rotatable together with the tool holder (7) about the rotational axis (8), wherein the force-fit or frictional chucking device (12A) comprises a hollow shaft (13) having a bore (14) which extends along the rotational axis (8) of the tool holder (7), wherein at least a portion of the tool shank (9) can be received detachably in the bore (14), and at least one clamping lug (15) projecting into the bore (14) to clamp the tool shank (9) in the hollow shaft (13).

2. Dental prophylaxis-treatment unit (1) according to Claim 1, **characterized in that**
the tool holder (7) is rotatably supported in the head part (6) of the prophylaxis-contra angle handpiece (2) by at least one slide bearing (11).

3. Dental prophylaxis-treatment unit (1) according to Claim 1, **characterized in that**
the tool holder (7) is rotatably supported in the head part (6) of the prophylaxis-contra angle handpiece (2) by at least one rolling bearing or ball bearing.

4. Dental prophylaxis-treatment unit (1) according to any one of the preceding Claims, **characterized in that**
the at least one clamping lug (15) forms a contact portion of the hollow shaft (13) which contacts a section of the tool shank (9) to fasten the tool shank (9) in a force-fit manner or frictionally in the hollow shaft (13).

5. Dental prophylaxis-treatment unit (1) according to Claim 4, **characterized in that** the contact portion comprises an inner diameter which is at most equal to the outer diameter of the tool shank (9).

6. Dental prophylaxis-treatment unit (1) according to Claim 4 or 5, **characterized in that** the contact portion comprises a mechanically roughened surface.

7. Dental prophylaxis-treatment unit (1) according to any one of the preceding Claims, **characterized in that**
the at least one clamping lug (15) is configured to fasten the dental tool (3) exclusively by the spring action and holding force generated and exerted by it.

8. Dental prophylaxis-treatment unit (1) according to any one of the preceding Claims, **characterized in that**
the at least one clamping lug (15) is non-detachably connected at at least two contact points (22) to the hollow shaft (13) or its jacket.

9. Dental prophylaxis-treatment unit (1) according to any one of the preceding Claims, **characterized by**
a sealing system (20) for sealing the head part (6) of the prophylaxis-contra angle handpiece (2), which prevents ingression of pollutants and / or a treatment agent into the head part (6) and which is provided on the dental tool (3), wherein it is disposed in particular on the dental tool (3), such that it interacts with the head part (6) of the prophylaxis-contra angle handpiece (2) to prevent ingression of pollutants and / or a treatment agent into the head part (6).

10. Dental prophylaxis-treatment unit (1) according to any one of the preceding Claims, **characterized by**
a sealing system (20) for sealing the head part (6) of the prophylaxis-contra angle handpiece (2), which prevents ingression of pollutants and / or a treatment agent into the head part (6) and which is provided on the prophylaxis-contra angle handpiece (2).

11. Dental prophylaxis-treatment unit (1) according to any one of the preceding Claims, **characterized by**
a sealing system (20) for sealing the head part (6) of the prophylaxis-contra angle handpiece (2), which prevents ingression of pollutants and / or a treatment agent into the head part (6) and which is formed of a plurality of parts, wherein at least a first part of the sealing system (20) is arranged on the dental tool (3) and at least a second part of the sealing system (20) is arranged on the prophylaxis-contra angle handpiece (2), wherein the first part and the second part of the sealing system (20) interact to prevent ingression of pollutants and / or a treatment agent into the head part (6).

12. Dental prophylaxis-treatment unit (1) according to any one of the preceding Claims, **characterized in that**,
the chucking device (12A, 12B) is formed as a pushing chucking device into which at least a section of the tool shank (9) can be inserted into the bore (14) of the hollow shaft (13) or can be removed thereof by a pushing and / or straight motion along the rotational axis (8) of the tool holder (7).

13. Dental prophylaxis-treatment unit (1) according to Claim 12 in combination with one of the Claims 9, 10 or 11, **characterized in that**
the sealing system (20), in particular the sealing system (20) formed of a plurality of parts, is formed such that the pushing of the dental tool (3) into the pushing chucking device causes or increases a sealing effect of the sealing system.

14. Dental prophylaxis-treatment unit (1) according to any one of the preceding Claims, **characterized in that**
the tool shank (9) is formed over the entire length (L) as a cylindrical pin having no recess for engagement of the tool holder (7).

15. Dental prophylaxis-treatment unit (1) according to any one of the preceding Claims, **characterized in that**
the prophylaxis-contra angle handpiece (2) has no actuator for removing the dental tool (3) or the tool shank (9) from the tool holder (7) and / or receiving it therein.

## Revendications

1. Unité de traitement de prophylaxie dentaire (1) comprenant: une pièce coudée de prophylaxie (2) avec une partie de poignée (4) qui s'étend le long d'un axe longitudinal (5), une partie de tête (6) en jonction avec la partie de poignée (4), un porte-outil (7), disposé de manière rotative dans la partie de tête (6), lequel s'étend le long d'un axe de rotation (8), dans laquelle l'axe longitudinal (5) de la partie de poignée (4) et l'axe de rotation (8) de la partie de tête (6) sont disposés en angle l'un par rapport à l'autre, et un outil dentaire (3) avec une queue d'outil (9) et avec une partie de traitement de prophylaxie (10) reliée à la queue d'outil (9), dans laquelle la queue d'outil (9) s'étend à partir d'une extrémité côté pièce coudée (9A) de l'outil dentaire (3) sur une longueur (L) jusqu'à la partie de traitement de prophylaxie (10), dans laquelle au moins une partie de la queue d'outil (9) peut être réceptionnée de manière détachable dans le porte-outil (7) de sorte que l'outil dentaire (3) est rotatif, ensemble avec le porte-outil (7), autour de l'axe de rotation (8), dans laquelle la queue d'outil (9) est fabriquée en plastique et dans laquelle la longueur (L) de la queue d'outil (9) est de 10,0 mm au maximum, **caractérisée en ce que** le porte-outil (7) présente un dispositif de serrage (12A), lequel est réalisé pour fixer la queue d'outil (9) de l'outil dentaire (3) par adhérence ou par friction pour maintenir la queue d'outil (9) de façon axiale par rapport à l'axe de rotation (8) du porte-outil (7) et produire un entraînement en rotation de la queue d'outil (9) de sorte que l'outil dentaire (3) est rotatif, ensemble avec le porte-outil (7), autour de l'axe de rotation (8), dans laquelle le dispositif de serrage par adhérence ou par friction (12A) présente un arbre creux (13) avec un alésage (14), s'étendant le long de l'axe de rotation (8) du porte-outil (7), dans lequel au moins une partie de la queue d'outil (9) peut être réceptionnée de manière détachable, et au moins une languette de serrage (15) qui fait saillie dans l'alésage (14) pour serrer la queue d'outil (9) dans l'arbre creux (13).

2. Unité de traitement de prophylaxie dentaire (1) selon la revendication 1, **caractérisée en ce que**
le porte-outil (7) est monté de manière rotative grâce à au moins un palier lisse (11) dans la partie de tête (6) de la pièce coudée de prophylaxie (2).

3. Unité de traitement de prophylaxie dentaire (1) selon la revendication 1, **caractérisée en ce que**
le porte-outil (7) est monté de manière rotative grâce à au moins un palier à rouleaux ou palier à billes dans la partie de tête (6) de la pièce coudée de prophylaxie (2).

4. Unité de traitement de prophylaxie dentaire (1) selon l'une des revendications précédentes, **caractérisée en ce que**
l'au moins une languette de serrage (15) forme une partie d'établissement de contact de l'arbre creux (13), laquelle entre en contact avec une partie de la queue d'outil (9) pour obtenir la fixation par adhérence ou par friction de la queue d'outil (9) dans l'arbre creux (13).

5. Unité de traitement de prophylaxie dentaire (1) selon la revendication 4, **caractérisée en ce que**
la partie d'établissement de contact présente un diamètre intérieur qui est au maximum de la même dimension que le diamètre extérieur de la queue d'outil (9).

6. Unité de traitement de prophylaxie dentaire (1) selon la revendication 4 ou 5, **caractérisée en ce que**
la partie d'établissement de contact présente une surface rendue mécaniquement rugueuse.

7. Unité de traitement de prophylaxie dentaire (1) selon l'une des revendications précédentes, **caractérisée en ce que**
l'au moins une languette de serrage (15) est réalisée pour fixer l'outil dentaire (3) exclusivement grâce à l'effet de ressort et la force de retenue produits et exercés par elle.

8. Unité de traitement de prophylaxie dentaire (1) selon l'une des revendications précédentes, **caractérisée en ce que**
l'au moins une languette de serrage (15) est reliée au niveau d'au moins deux points de contact (22) de façon non détachable à l'arbre creux (13) ou à l'enveloppe de celui-ci.

9. Unité de traitement de prophylaxie dentaire (1) selon l'une des revendications précédentes, **caractérisée par**
un système d'étanchéité (20) pour étanchéifier la partie de tête (6) de la pièce coudée de prophylaxie (2), lequel empêche une pénétration de salissures et/ou d'un agent de traitement dans la partie de tête (6) et lequel est prévu sur l'outil dentaire (3), dans laquelle il est en particulier disposé sur l'outil dentaire (3) de telle sorte qu'il coopère avec la partie de tête (6) de la pièce coudée de prophylaxie (2) pour empêcher une pénétration de salissures et/ou d'un agent de traitement dans la partie de tête (6).

10. Unité de traitement de prophylaxie dentaire (1) selon l'une des revendications précédentes, **caractérisée par**
un système d'étanchéité (20) pour étanchéifier la partie de tête (6) de la pièce coudée de prophylaxie (2), lequel empêche une pénétration de salissures et/ou d'un agent de traitement dans la partie de tête (6) et lequel est prévu sur la pièce coudée de prophylaxie (2).

11. Unité de traitement de prophylaxie dentaire (1) selon l'une des revendications précédentes, **caractérisée par**
un système d'étanchéité (20) pour l'étanchéification de la partie de tête (6) de la pièce coudée de prophylaxie (2), lequel empêche une pénétration de salissures et/ou d'un agent de traitement dans la partie de tête (6) et lequel est réalisé en plusieurs parties, dans laquelle au moins une première partie du système d'étanchéité (20) est prévue sur l'outil dentaire (3) et au moins une deuxième partie du système d'étanchéité (20) est prévue sur la pièce coudée de prophylaxie (2), dans laquelle la première partie et la deuxième partie du système d'étanchéité (20) coopèrent pour empêcher une pénétration de salissures et/ou d'un agent de traitement dans la partie de tête (6).

12. Unité de traitement de prophylaxie dentaire (1) selon l'une au moins des revendications précédentes, **caractérisée en ce que**
le dispositif de serrage (12A, 12B) est réalisé en tant que dispositif de serrage de glissement où au moins une partie de la queue d'outil (9) peut être glissée, grâce à un mouvement de glissement et /ou rectiligne le long de l'axe de rotation (8) du porte-outil (7), dans l'alésage (14) de l'arbre creux (13) ou en être retirée.

13. Unité de traitement de prophylaxie dentaire (1) selon la revendication 12 en combinaison avec l'une des revendications 9, 10 ou 11, **caractérisée en ce que** le système d'étanchéité (20), en particulier le système d'étanchéité réalisé en plusieurs parties, est conçu de telle sorte que l'insertion par glissement de l'outil dentaire (3) dans le dispositif de serrage de glissement produit ou augmente un effet d'étanchéification du système d'étanchéité.

14. Unité de traitement de prophylaxie dentaire (1) selon l'une des revendications précédentes, **caractérisée en ce que**
la queue d'outil (9) est réalisée sur toute la longueur (L) en tant que tige cylindrique sans évidement pour la mise en prise avec le porte-outils (7).

15. Unité de traitement de prophylaxie dentaire (1) selon l'une des revendications précédentes, **caractérisée en ce que**
la pièce coudée de prophylaxie (2) ne présente pas de dispositif d'actionnement pour détacher et/ou réceptionner l'outil dentaire (3) ou la queue d'outil (9) dans le porte-outil (7).
